# FASCICULE DE BREVET EUROPEEN

(11) **EP 0 792 099 B1**
(45) Date de publication et mention de la délivrance du brevet: **17.11.1999**
(21) Numéro de dépôt: 95943507.4
(22) Date de dépôt: 19.07.1995
(51) Int. Cl.: A01M 29/00

(54) **DISPOSITIF POUR REPOUSSER LES VOLATILES**
VÖGELABWEHRVORRICHTUNG
BIRD REPELLING DEVICE

(30) Priorité: 19.07.1994 FR 9409014
(43) Date de publication de la demande: 03.09.1997
(73) Titulaire: SOCIETE ECOPIC LINE S.A.R.L., F-94120 Fontenay-sous-Bois (FR)
(72) Inventeur: NEGRE, Gilles, F-60330 Le Plessis-Belleville (FR)
(74) Mandataire: Bonneau, Gérard
(86) Numéro de dépôt international: FR9500966
(87) Numéro de publication internationale: WO9602135

(56) Documents cités:
- EP-A- 0 340 108
- FR-A- 2 556 932
- FR-A- 2 682 558
- US-A- 3 282 000

## Description

La présente invention est relative à un dispositif pour repousser les volatiles, et plus particulièrement à un dispositif pour empêcher que des volatiles ne se posent sur certaines surfaces déterminées.

On sait que les volatiles se posent volontiers sur les surfaces d'appui, même les plus étroites, qu'ils trouvent sur les constructions, et quelles nuisances leur présence engendre alentours.

L'un des moyens les plus efficaces pour prévenir ces nuisance consiste à recouvrir les surfaces sur lesquelles le stationnement des volatiles est indésirable, d'un dispositif comportant une embase depuis laquelle s'étendent du côté opposé auxdites surfaces, des picots dissuadant les volatiles de se poser. Un tel dispositif est par exemple décrit dans la demande de brevet européen numéro 0 340 108, ou le brevet français 91 12761 dont le dépôt a été effectué également par l'inventeur de la présente invention, et publiés respectivement le 2 novembre 1989 et le 4 mars 1994.

L'art antérieur que constituent de telles demandes de brevets, ainsi que le brevet US 3,282,000 délivré le ler novembre 1966 (Shaw) ou des produits disponibles dans le commerce tels que DEPIGEONAL (marque déposée), enseignent que les picots peuvent être inclinés par rapport au plan de l'embase, d'une part pour des questions d'efficacité de dissuasion des volatiles en bordure de surface à protéger, et d'autre part pour des raisons d'économie, les dispositifs à picots inclinés couvrant, à taille d'embase égale, une plus grande surface à protéger que les dispositifs à picots droits.

L'enjeu tant technique qu'économique pour tous ces dispositifs réside essentiellement dans le système d'attache des nombreux picots à l'embase: le système doit permettre une attache résistante aux chocs et pressions infligés par les corps des volatiles, mais également doit permettre un assemblage aisé et peu coûteux.

Les systèmes connus d'attache sont l'enfichage de picots par le dessus de l'embase (brevet US 3,282,000), avec les inconvénients connus de l'homme du métier de facilité d'arrachement par les volatiles, l'insertion par le dessous de picots isolés présentant une protubérance de matière (brevet français 91 12761), avec les inconvénients de coût d'assemblage et d'obligation mécanique d'une certaine épaisseur de l'embase, et enfin l'assemblage par le dessous d'une tige cintrée en forme de U évasé comportant deux branches et pliée à la base en un oeillet d'encliquetage venant coopérer avec un ergot prévu dans l'embase (produit DEPIGEONAL, marque déposée), avec les inconvénients de coût de fabrication de la tige.

C'est donc un objet de la présente invention de proposer un dispositif qui ne présente pas à la fois tous les inconvénients sus-mentionnés.

Le dispositif de la présente invention comprend un dispositif pour repousser les volatiles, comprenant une embase comportant une face supérieure et une face inférieure, et des picots s'étendant depuis ladite face supérieure, certains au moins des picots étant constitués d'une tige en matériau élastique cintrée essentiellement en forme de U évasé, comportant deux branches et une base. Un tel dispositif est connu par le FR-A-2 556 932. Lesdites deux branches sont engagées par ladite face inférieure respectivement dans une paire de canaux traversant l'embase de part en part, tandis que les branches et les canaux coopèrent pour maintenir la base plaquée contre la face inférieure de l'embase lorsque les branches sont complètement engagées dans les canaux.

Plus particulièrement, les branches complètement engagées dans les canaux forment entre elles un angle (alpha1) inférieur à celui (alpha2) qu'elles forment avant d'être engagées.

Dans tous les cas, les paires de canaux peuvent être disposées en quinquonce sur l'embase.

L'une des branches de certaines au moins des tiges, peut avoir une longueur (L1 inférieure à celle (L2) de l'autre branche.

Une gorge peut être pratiquée sur la face inférieure entre deux canaux d'une paire de canaux, de manière à ce que la base ne dépasse pas le plan de ladite face inférieure lorsque les branches sont complètement engagées dans les canaux.

Dans un mode d'implémentation particulier, la base comporte une protubérance destinée à coopérer avec l'embase pour bloquer la tige lorsque les branches sont complètement engagées dans les canaux.

Une géométrie particulière de la protubérance lui permet de pénètrer en force dans la matière de l'embase lorsque les branches sont complètement engagées dans les canaux.

L'élasticité de la tige permet le passage brusque de la position où les branches sont partiellement engagées, à celle où elles sont complètement engagées dans les canaux. La force exercée par les branches pour atteindre l'angle (alpha1), suffit pour faire pénétrer la protubérance dans la matière de l'embase.

Les canaux peuvent avoir une courbure de leur paroi extérieure de sorte que la section desdits canaux décroit linéairement depuis la face inférieure jusqu'à la face supérieure.

Plus particulièrement, la paroi extérieure des canaux est constituée sur une partie au moins de sa longueur, de deux surfaces planes (10) formant un angles entre elles.

L'invention sera mieux comprise grâce à la description détaillée qui suit, accompagnée des figures suivantes:
Fig.1 montre une vue en perspective du dispositif de la présente invention.
Fig.2 montre une vue en coupe d'une tige.
Fig.3 montre une vue en coupe suivant A-A du dispositif de la Fig.1 alors que les branches de la tige ne sont pas encore complètement engagées dans les canaux correspondants de l'embase.
Fig.4 montre une vue en coupe suivant A-A avec les branches complètement engagées dans les canaux correspondants.
Fig.5 montre une vue en coupe suivant A-A avec les branches complètement engagées, et une gorge prévue entre les canaux pour recevoir la base de la tige.
Fig.6 montre une vue en coupe suivant A-A avec les branches complètement engagées, la gorge prévue entre les canaux et une géométrie particulièrement avantageuse des canaux.
Fig.7A montre une vue en coupe suivant B-B d'un canal au niveau de la face supérieure de l'embase.
Fig.7B montre une vue en coupe suivant C-C d'un canal au niveau de la face inférieure de l'embase.
Fig.8 montre une coupe transversale du dispositif au niveau de la base de la tige.

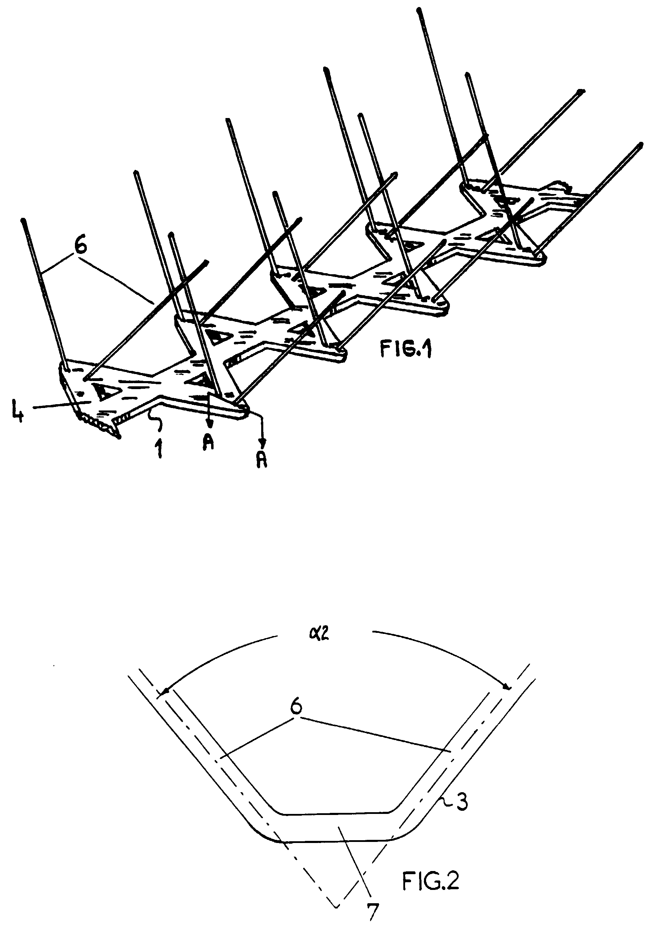

Fig.1 montre une vue en perspective du dispositif de la présente invention. Une embase 1 comporte une face supérieure 4 depuis laquelle s'étendent des branches 6 pour dissuader les volatiles de se poser sur une surface déterminée. Une fois les branches montées sur l'embase, celle-ci est maintenue plaquée contre ladite surface par tout moyen connu de l'homme du métier, et notamment par collage. Comme il est détaillé plus loin, les branches constituent par paires les deux branches d'une même tige cintrée en forme de U évasé, et engagées dans des canaux 2 traversant l'embase de part en part. La réalisation d'une telle embase est connue de l'homme du métier notamment par moulage de polyméthylméthacrylate.

Bien que non représenté sur la Fig.1, les branches peuvent ne pas avoir toutes la même inclinaison par rapport au plan de l'embase.De même, elles peuvent ne pas avoir toutes la même longueur; il peut y avoir des différences d'une paire à l'autre, ou bien deux branches d'une même paire peuvent avoir des longueurs différentes: des longueurs comprises entre 5 et 15 cm pour une branche, et 8 et 25 cm pour l'autre s'avèrent particulièrement efficaces contre des pigeons. Enfin une même tige peut comporter plus de deux branches.

Fig.2 montre une vue en coupe d'une tige 3 avant engagement dans les canaux de l'embase. La tige est cintrée essentiellement en forme de U évasé avec deux branches 6 et une base 7. Les branches forment entre elles un angle alpha2. La tige peut être en métal, par exemple en acier inoxydable 302 (DIN 17224) d'un diamètre de 1.3mm, ou un autre matériau que le cintrage ne fragiliserait pas, et dont l'élasticité est suffisante. Ce genre de tige est obtenu industriellement de manière connue.

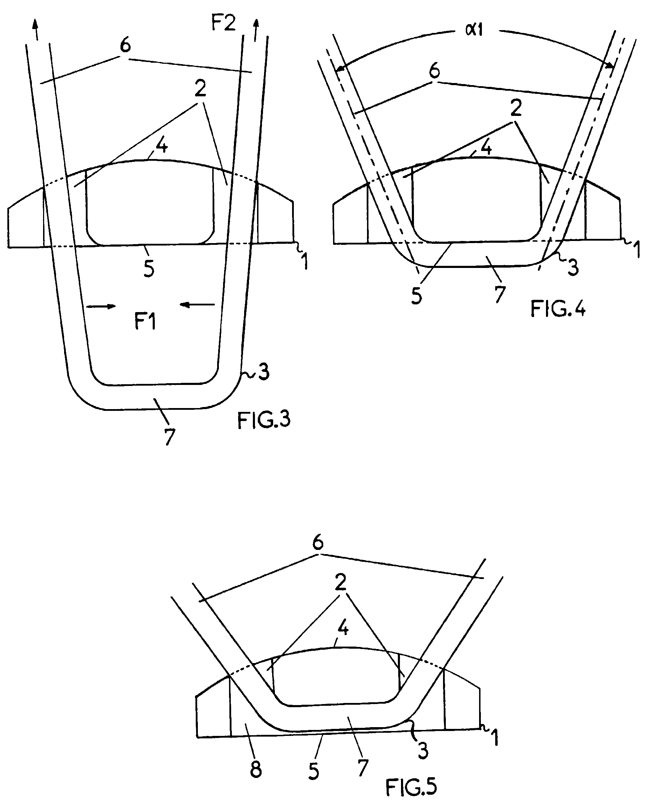

Fig.3 montre une vue en coupe suivant A-A dans la Fig.1 du dispositif de l'invention alors que les branches 6 de la tige 3 ne sont pas encore complètement engagées dans des canaux 2 correspondants de l'embase 1. Les branches de la tige sont pincées suivant la direction des flèches F1 avant engagement dans les canaux suivant la direction des flèches F2. L'engagement a lieu par la face inférieure 5 de l'embase, pour que les branches débouchent de la face supérieure 4. Les canaux ont une section légèrement supérieure à celle des branches de manière à permettre un montage aisé.

Le montage est réalisé manuellement ou par machine automatique.

Fig.4 montre une vue en coupe suivant A-A avec les branches 6 complètement engagées dans les canaux 2 correspondants. Lorsque la base 7 est plaquée contre la face inférieure 5 de l'embase, les branches de la tige 3 tendant à retrouver par élasticité leur angle de repos alpha2, coopèrent avec les canaux par appui sur leur bord en face supérieure 4 pour maintenir la base contre la face inférieure. L'angle alpha1 que les branches présentent après avoir été complètement engagées est donc inférieur à alpha2.

La force d'attache de la tige à l'embase sera fonction de la différence entre les angles alpha2 et alpha1, du coefficient d'élasticité du matériau de la tige, mais aussi de la contrainte mécanique qu'aura subie celle-ci lorsque les branches sont engagées dans les canaux.

Il est particulièrement avantageux d'avoir un angle alpha1 compris entre 30 et 90 degrés, et un angle alpha2 compris entre 45 et 120 degrés.

Lorsque l'embase est maintenue plaquée contre la surface à protéger de volatiles indésirables, la base de la tige est enserrée et les branches ne peuvent plus être ôtées de l'embase.

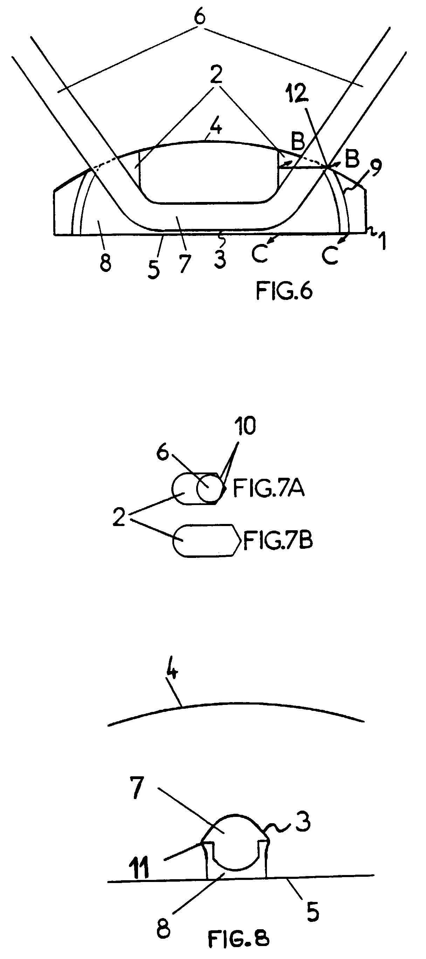

Fig.5 montre une vue en coupe suivant A-A avec les branches 6 complètement engagées, et une gorge 8 prévue entre les canaux 2 pour recevoir la base 7 de la tige 3. Cette disposition permet, par rapport à la précédente, que la base de la tige ne dépasse pas du plan de la face inférieure 5, facilitant ainsi le plaquage de l'embase contre la surface à protéger.

En cas de collage de l'embase, la colle participe au maintien de la base dans la gorge.

Fig.6 montre une vue en coupe suivant A-A avec les branches 6 complètement engagées, la gorge 8 prévue entre les canaux 2 et une géométrie particulièrement avantageuse desdits canaux.

Cette géométrie consiste en une courbure 9 de la paroi extérieure des canaux, c'es-à-dire la paroi la plus éloignée de la gorge joignant deux canaux. Cette courbure, obtenue lors du moulage de l'embase 1 ou tout autre moyen connu, permet, lors de l'engagement des branches, d'une part un montage plus aisé puisqu'une plus grande ouverture est présente sur la face inférieure 5 de l'embase, et d'autre part, de moins contraindre mécaniquement le matériau de la tige comme expliqué ci-après. Lors de l'engagement des branches, celles-ci viennent en appui extérieur sur un point de tangente 12 de la courbure, leur partie inférieure à ce point de tangente ayant tendance à s'arrondir en arc de cercle et à épouser la courbure de la paroi extérieure des canaux. Au montage, les branches se croisent donc au dessus de l'embase, avant de décroiser lorsque la base 7 se rapproche de la gorge, et enfin atteindre l'angle alpha1 entre elles lorsque la base se trouve dans la gorge. Cet arrangement permet de répartir la contrainte mécanique de la tige sur une plus grande longueur que dans le cas de canaux droits, et donc de lui conserver toute l'élasticité qui la fait tendre avec force vers l'angle alpha2 entre les branches. La rigidité de l'assemblage tige-embase en est d'autant plus importante.

Fig.7A montre une vue en coupe suivant B-B de la Fig.6 d'un canal 2 au niveau de la face supérieure 4 de l'embase 1. La paroi extérieure du canal peut avantageusement ne pas être arrondie, mais être constituée comme indiquée sur la figure, de deux surfaces planes 10 présentant un angle entre elles. Cet arrangement vise à résoudre certains problèmes liés à la différence nécessaire pour un montage aisé, de section entre les canaux et les branches 6. Lorsque la branche est engagée dans le canal, elle vient donc en appui sur deux lignes le long de la courbure 9, permettant un centrage automatique dans le canal. Une fois la branche complètement engagée, elle ne repose que sur un point de chacune desdites surfaces planes, soit en appui isostatique permettant une bonne tenue radiale de la branche.

Fig.7B montre une vue en coupe suivant C-C de la Fig.6 du canal au niveau de la face inférieure 5 de l'embase.

Alternativement, le canal peut présenter une paroi extérieure arrondie, et des surfaces planes comme indiqué ci-dessus uniquement dans la partie du canal située proche de la face supérieure de l'embase.

Fig.8 montre une coupe transversale du dispositif au niveau de la base 7 de la tige 3. La base à été préalablement usinée de manière connue pour y réaliser une protubérance 11 de la matière dont est faite la tige. La base a, au niveau de la protubérance, une section légèrement supérieure à celle de la gorge 8, de sorte que lorsqu'elle y est enfoncée, la protubérance pénètre en force dans la matière de l'embase en la déformant légèrement au niveau de l'intérieur de la gorge, assurant ainsi une bonne tenue radiale comme axiale de la base dans la gorge, soit un sertissage particulièrement solide et économique de l'ensemble tige-embase.

La géométrie de la protubérance peut avantageusement être celle indiquée Fig.8 permettant d'obtenir un effet "hameçon", c'est-à-dire l'introduction aisée de la base dans la gorge, mais son retrait très difficile.

La force nécessaire à la pénétration de la protubérance dans la matière de l'embase au niveau de l'intérieur de la gorge, peut être obtenue par le passage brusque des branches 6 de la tige au moment du montage, de la position croisée au dessus de l'embase, à la position correspondant à l'angle alpha1. Il faut pour cela une combinaison appropriée des paramètres que constituent les caractéristiques mécaniques de la tige, l'angle alpha2, les caractéristiques géométriques des canaux, l'angle alpha1 ainsi que la rapport entre les sections de la protubérance et de la gorge. Une combinaison appropriée est une tige en acier inoxydable de 1.3 mm de diamètre et une embase en polyméthylméthacrylate, avec un angle alpha2 de l'ordre de 120 degrés et un angle alpha1 de l'ordre de 90 degrés, une gorge de largeur 1.4 mm et une tige de plus grand diamètre 1.5 mm au niveau de la protubérance. Moyennant une telle combinaison appropriée, l'attache de la tige à l'embase est réalisée en une seule opération simple et économique.

Alternativement, un logement peut être prévu dans la gorge 8 pour y recevoir la protubérance, sans que celle-ci n'ait à pénétrer en force dans la matière de l'embase.

## Revendications

1. Dispositif pour repousser les volatiles, comprenant une embase (1) comportant une face supérieure (4) et une face inférieure (5), et des picots s'étendant depuis ladite face supérieure, certains au moins des picots étant constitués d'une tige (3) en matériau élastique cintrée essentiellement en forme de U évasé, comportant deux branches (6) et une base (7), ledit dispositif étant caractérisé en ce que les deux branches sont engagées par ladite face inférieure respectivement dans une paire de canaux (2) traversant l'embase de part en part, les branches et les canaux coopérant pour maintenir la base plaquée contre la face inférieure de l'embase lorsque les branches sont complètement engagées dans les canaux.

2. Le dispositif de la revendication 1 caractérisé en ce que les branches complètement engagées dans les canaux forment entre elles un angle (alpha1) inférieur à celui (alpha2) qu'elles forment avant d'être engagées.

3. Le dispositif de la revendication 1 ou 2, caractérisé en ce que les paires de canaux sont disposées en quinquonce sur l'embase.

4. Le dispositif selon l'une des revendications 1 à 3, caractérisé en ce que l'une des branches de certaines au moins des tiges, a une longueur (L1) inférieure à celle (L2) de l'autre branche.

5. Le dispositif selon l'une des revendications 1 à 4, caractérisé en ce qu'une gorge (8) est pratiquée sur la face inférieure entre deux canaux d'une paire de canaux, de manière à ce que la base ne dépasse pas le plan de ladite face inférieure lorsque les branches sont complètement engagées dans les canaux.

6. Le dispositif selon l'une des revendications 1 à 5, caractérisé en ce que la base comporte une protubérance (11) destinée à coopérer avec l'embase pour bloquer la tige lorsque les branches sont complètement engagées dans les canaux.

7. Le dispositif selon la revendication 6, caractérisé en ce que la protubérance pénètre en force dans la matière de l'embase lorsque les branches sont complètement engagées dans les canaux.

8. Le dispositif de la revendication 7, caractérisé en ce que la force exercée par les branches partiellement engagées dans les canaux pour atteindre l'angle (alpha1), suffit pour faire pénétrer la protubérance dans la matière de l'embase.

9. Le dispositif selon l'une des revendications 1 à 8, caractérisé en ce que les canaux ont une courbure (9) de leur paroi extérieure de sorte que la section desdits canaux décroit linéairement depuis la face inférieure jusqu'à la face supérieure.

10. Le dispositif de la revendication 9, caractérisé en ce que la paroi extérieure des canaux est constituée sur une partie au moins de sa longueur, de deux surfaces planes (10) formant un angles entre elles.

## Claims

1. Bird repelling device comprising a base support (1) with a top surface (4) and a bottom surface (5), and spike elements extending from said top surface, at least some of the spike elements consisting of a generally U-shaped bent resilient rod (3) with two arms (6) and a base (7), said bird repelling device being characterized in that both arms are inserted from the bottom surface respectively into a pair of canals (2) through the base support, the arms and the canals together urging the base against the bottom surface of the base support when the arms are fully inserted into the canals.

2. The device according to claim 1, characterized in that the arms fully inserted into the canals are at an angle (alpha 1) which is smaller than the angle (alpha 2) they are at before being inserted.

3. The device according to claim 1 or 2, characterized in that the pairs of canals are placed in alternate rows on the base support.

4. The device according to any one of claims 1 to 3, characterized in that one arm of at least some of the rods has a length (L1) smaller than the length (L2) of the other arm.

5. The device according to any one of claims 1 to 4, characterized by a groove (8) on the bottom surface between two canals of a pair, such that the base does not stick out of the plane of said bottom surface when the arms are fully inserted into the canals.

6. The device according to any one of claims 1 to 5, characterized in that the base has a protruding portion (11) aimed at, together with the base support, fastening the rod when the arms are fully inserted into the canals.

7. The device according to claim 6, characterized in that the protruding portion is forced into the material of which the base support is made when the arms are fully inserted in the canals.

8. The device according to claim 7, characterized in that the force exerted by the arms partially inserted into the canals to reach the angle (alpha 1), is sufficient to force the protruding portion into the material of which the base support is made.

9. The device according to any one of claims 1 to 8, characterized in that the outer surface of the side-walls of the canals has a bending (9) such that the diameter of said canals linearly decreases in size from the bottom surface to the top surface.

10. The device according to claim 9, characterized in that the outer surface of the canals comprises, at least on part of its length, two plane surfaces (10) being at an angle with each other.

## Patentansprüche

1. Vorrichtung zum Abweisen von Vögeln, bestehend aus einem Sockel (1) mit einer Oberseite (4) und einer Unterseite (5) und aus Spitzen, die sich von der Oberseite aus erstrecken und von denen mindestens manche aus einem Stab (3) aus einem elastischen Werkstoff bestehen, der im wesentlichen in Form eines ausgeweiteten U's gebogen ist und zwei Arme (6) und eine Basis (7) aufweist, dadurch gekennzeichnet, daß die beiden Arme über die Unterseite jeweils in ein Paar von den Sockel vollständig durchquerenden Kanälen (2) eingeführt sind, wobei die Arme und die Kanäle zusammenwirken, um die Basis an die Unterseite des Sockels angedrückt zu halten, wenn die Arme vollständig in die Kanäle eingeführt sind.

2. Vorrichtung nach Anspruch 1, dadurch gekennzeichnet, daß die vollständig in die Kanäle eingeführten Arme miteinander einen Winkel (alpha1) bilden, der kleiner als der Winkel (alpha2) ist, den sie vor Einführung bilden.

3. Vorrichtung nach Anspruch 1 oder 2, dadurch gekennzeichnet, daß die Kanalpaare auf dem Sockel versetzt angeordnet sind.

4. Vorrichtung nach einem der Ansprüche 1 bis 3, dadurch gekennzeichnet, daß einer der Arme mindestens von manchen Stäben eine Länge (L1) hat, die kleiner als die Länge (L2) des anderen Arms ist.

5. Vorrichtung nach einem der Ansprüche 1 bis 4, dadurch gekennzeichnet, daß auf der Unterseite zwischen zwei Kanälen eines Kanalpaares eine Nut (8) vorgesehen ist, so daß die Basis nicht die Ebene der Unterseite überschreitet, wenn die Arme vollständig in die Kanäle eingeführt sind.

6. Vorrichtung nach einem der Ansprüche 1 bis 5, dadurch gekennzeichnet, daß die Basis einen Vorsprung (11) aufweist, der dazu bestimmt ist, mit dem Sockel zusammenzuwirken, um den Stab zu blockieren, wenn die Arme vollständig in die Kanäle eingeführt sind.

7. Vorrichtung nach Anspruch 6, dadurch gekennzeichnet, daß der Vorsprung unter Aufwendung von Kraft in den Werkstoff des Sockels eindringt, wenn die Arme vollständig in die Kanäle eingeführt werden.

8. Vorrichtung nach Anspruch 7, dadurch gekennzeichnet, daß die Kraft, die von den in die Kanäle partiell eingeführten Armen ausgeübt wird, um den Winkel (alpha1) zu erreichen, ausreicht, um den Vorsprung in den Werkstoff des Sockels eindringen zu lassen.

9. Vorrichtung nach einem der Ansprüche 1 bis 8, dadurch gekennzeichnet, daß die Außenwand der Kanäle eine solche Krümmung (9) aufweist, daß der Querschnitt der Kanäle von der Unterseite bis zur Oberseite linear abnimmt.

10. Vorrichtung nach Anspruch 9, dadurch gekennzeichnet, daß die Außenwand der Kanäle mindestens auf einem Teil ihrer Länge von zwei ebenen Flächen (10) gebildet ist, die miteinander einen Winkel bilden.
